# EUROPEAN PATENT APPLICATION

(11) **EP 2 077 071 A1**
(43) Date of publication of application: **08.07.2009**
(21) Application number: 07791889.4
(22) Date of filing: 27.07.2007
(51) Int. Cl.: A01K 35/00, B65D 63/12

(54) **BINDING BAND FOR BIRD BAND AND BIRD BAND STRUCTURE**

(30) Priority: 10.08.2006 JP 2006006493
(71) Applicant: Champion Trade Co., Ltd., Toshima-ku Tokyo 170-0004 (JP)
(72) Inventor: ISHIHARA, Kenichi, Tokyo 170-0004 (JP)
(74) Representative: Hatzmann, Martin
(86) International application number: PCT/JP2007/065215
(87) International publication number: WO 2008/018368

(57) **Abstract**

A binding band for bird ring and a bird ring structure are provided whose construction is simple and inexpensive, whose fitting to the bird ring is easy, but detachment is not easy, and that enable not only reliable and easy recognition of individual birds, but also error-free reception, storage, and transmission of information about a race or records thereof, thereby reliably preventing undue use.

The binding band for bird ring 1 comprises a body part 2, an insertion end 3 provided at one end of the body part 2, an engagement attaching part 4 that is provided at another end of the body part 2 and has a hollow insertion passage part 25 into which the insertion end 3 is irreversibly inserted and maintained, and an information processing part 7 that is a portion of the body part 2, provided between a central part C of the body part 2 and the insertion end 3, and can store predetermined information and transmit/receive the information.

## Description

### Technical Field

The present invention relates to a binding band fitted to a bird ring put on a leg of a bird and a bird ring structure composed of a combination of the bird ring and the binding band for bird ring.

### Background Art

Bird rings (called leg rings in some cases) on which specific identification numbers are marked have conventionally been put on legs of birds to recognize individual birds such as pigeons and individual birds have been identified by being visually identified with such identification numbers.

Namely, the bird rings represent a family register of the individual birds and have internationally been used.

Such bird rings are formed based on international standards and are basically formed into a hollow cylindrical shape made of, for example, light metal such as aluminum or synthetic resin, having an outside diameter of 10 mm, a height of 10 mm, and an inside diameter of 8 mm.

Then, a country name, a year, a serial number in that year and the like are marked on the surface of the bird ring, and such information is individual information accompanying a lifetime of the individual birds and, at the same time, the information is to be internationally registered.

The bird ring is worn by the eighth day after birth of the bird and becomes undetachable as it grows so that the bird ring will not be detached until the bird dies.

Particularly for racing pigeons, about eight years are a life span in which they can participate in races.

Meanwhile, when birds such as pigeons are made to fly in a predetermined race, means described below have conventionally be taken out for necessity of making a record of the race, that is:
(1) When a pigeon with a printed rubber ring enabling identification of the race returns from the race, the rubber ring is removed and a time is recorded in a recording clock. However, this method has shortcomings of a time loss because of a series of operations being necessary when a pigeon returns and before making a record, such as capturing the pigeon and removing a rubber ring therefrom by a keeper, of not being durable for the rubber ring, and further of being difficult to recognize information about the pigeon due to contamination. Thus, in addition to this method, currently:
(2) Another method is adopted and used in which an identification bird ring containing memory that can recognize the individual pigeons is worn on a different leg from the leg on which the bird ring is worn and when a pigeon returns from the race, the return thereof is detected and recorded by an antenna installed at an entrance to a pigeon coop of returning pigeons.

However, there is a problem also in this case of an increased burden in terms of cost and weight (On the global market, a lighter bird ring even by 0.1 g is appreciated and also a less expensive identification bird ring in the current price even by 1 yen is called for) resulting from a fact that a pigeon must wear two bird rings.

Also, there is a significant problem that injustices committed cannot be prevented due to the fact that the identification bird ring containing memory can be easily attached to and detached from a leg of a pigeon on a pigeon race.

Further, since conventional identification of birds is performed based on visual inspection, as described above, there are problems in that excrements of birds stick to a human body when identifying the identification number by visual inspection, a lot of time is needed to read identification numbers and a read error of identification numbers may occur. Also, there is a problem that a lot of effort and time is needed because, when pigeons are made to fly in a race like a pigeon race, all works must be done manually ranging from putting separate identification tool on a pigeon's leg, removing the identification tool therefrom and recording arrival times to deciding ranking. Moreover, there is another problem in that injustices committed by intentional replacement of correct and relevant separate identification tool with different one and the like in a pigeon race, cannot be prevented.

Further, since a pigeon race frequently takes place in an environment of high temperature, low temperature, or in a strict environment under which dramatic change of temperature is usually expected, and also rain, snow or the like is frequently involved in many cases, damage or falling off of each separate relevant identification tool and losses of markings including the identification number of the separate identification tool occur frequently, leading to many cases in which predetermined information about the pigeon race cannot be obtained.

To solve such conventional problems, as shown in, for example, Japanese Utility Model No. 3079914 (Patent Document 1), instead of a regular bird ring, a structure of a private ring for pigeons in which a portion of a bird ring body is separated and it can be optionally snapped in or inserted into the rest of the body, has been shown. However, there is a problem that, in addition to a problem that such a structure is complicated and costs add up, undue use thereof cannot be prevented because such a private ring can be detachably attached to a leg of a pigeon, easily, it can be removed from one pigeon and be attached to another pigeon later on and further, no improvement at all is made to solve conventional problems when reading out markings such as identification numbers marked on the private ring.

Japanese Unexamined Patent Publication No. 2002-360103 (Patent Document 2) shows an example of the conventional method shown above in (2) and discloses a structure in which a bird ring and an indication plate are combined and wherein the bird ring is previously provided with a micro chip inside thereof and it is further configured so that a bird ring owner indication plate formed separately is detachably attached to the bird ring with snap-in type manner.

However, integrating a microchip into the bird ring itself has a maj or shortcoming that, if the microchip is a defective product or the microchip fails while the bird ring is used, necessary information cannot be obtained in subsequent races and the like because replacing the bird ring is prohibited, and there are also problems that an entire structure of the indication plate becomes large and complicated and further a possibility in which the indication plate may fall off in use because of its simple fitting snap-in type construction and a possibility in which the indication plate may be used unduly because of ease of removal, are both seemed to be high level.

Also, Japanese Unexamined Patent Publication No. 7-154290 (Patent Document 3) shows a structure in which an antenna part and a control part are mounted in the bird ring itself in advance and another structure in which an external antenna part and an external control part are fitted on a bird ring.

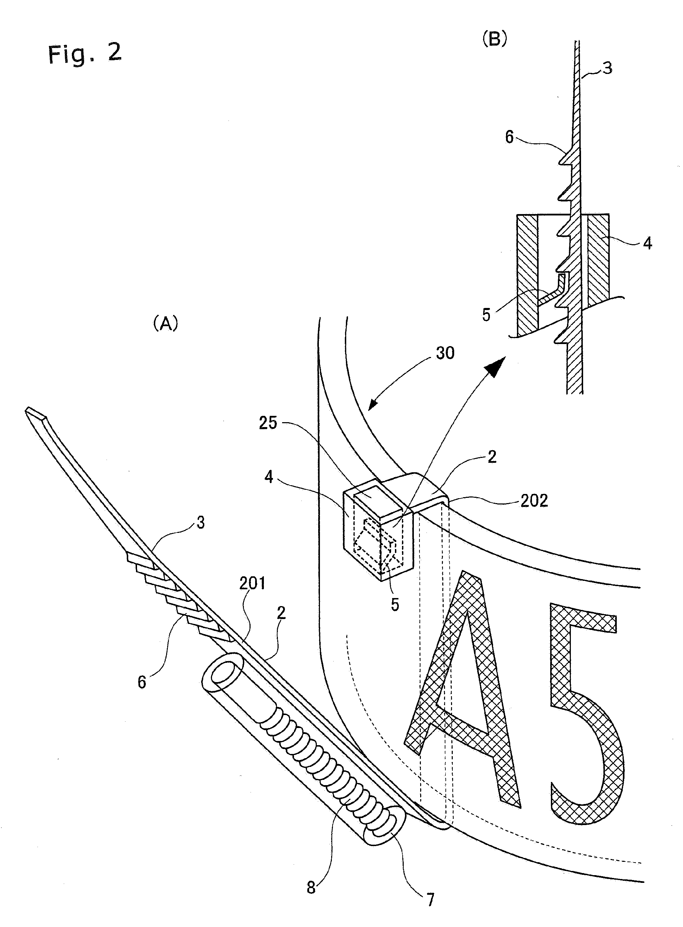

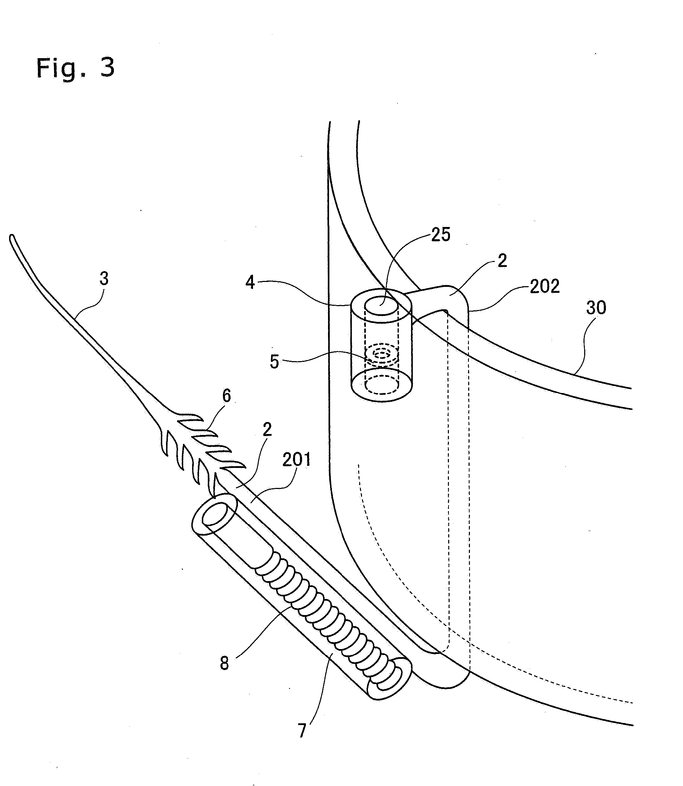

Particularly the former has the same problems as those pointed out for Patent Document 2. For the latter, a responder supporting means including an external antenna part and an external control part according to FIG. 2 has problems that, since the responder supporting means is made to engage with the bird ring only through a pawl, possibility of the responder supporting member easily getting out of place and falling off during a pigeon race, is very high and also at the same time, possibility of undue use there of is very high. And the responder supporting means including an external antenna part and an external control part according to FIG. 3 has problems that, since the responder supporting means has arms to be fitted into upper and lower edges of the bird ring, its structure becomes more complicated and costs add up and, at the same time, possibilities of undue use thereof are high because the responder supporting means is a snap-in type and can easily be removed.

In addition, Japanese Utility Model No. 3067066 (Patent Document 4) illustrates a regular bird ring that is formed from magnetic material and on whose surface markings discernible by visual inspection are printed, but Patent Document 4 neither discloses nor suggests any concrete method of how the magnetism generated from the bird ring being used, at all.

Japanese Unexamined Patent Publication No. 7-31318 (Patent Document 5) has problems in that it does not specify any fitting parts or orientation to an animal or bird to which a ring is fitted and, if, for example, a ring is actually fitted to a leg of a pigeon and the bird ring is tightened, blood circulation in the leg of the pigeon is obstructed, and if the bird ring is loosened, the bird ring easily gets out of place, but a more serious problem is that it becomes possible to use the bird ring improperly in a pigeon race by cutting only a belt part and wearing a separate bird ring using another belt.

On the other hand, as a separate problem from those as mentioned above, it is desired that a cost for the above-mentioned identification tool which is used in the pigeon race should be cheap as much as possible.

Accordingly, if when a predetermined pigeon to which the specific identification tool has once been attached, has been dead or the predetermined pigeon has not been able to join the pigeon race with some what reason, there would be a case in that such identification tool would become useless.

In such case, when a cost for the identification tool is expensive, another problem would be arisen in which an economic burden of an owner of the pigeon would be increased.

For the sake of these problems, a requirement for a binding band for bird ring which can be reused by enabling the identification tool to be attached to a separate pigeon in the above-mentioned specific situation, has been increased, recently.

### Disclosure of the Invention

Therefore, an object of the present invention is to provide a binding band for bird ring and a bird ring structure that solve problems of a conventional bird ring used for birds described above, whose construction is simple and inexpensive, whose fitting to the bird ring is easy, but detachment thereof is not easy, and that enable not only reliable and easy recognition of individual birds, but also error-free reception, storage, and transmission of information about a race or records thereof, thereby allowing verification of data on the race reliably in a short time so that it becomes possible to reliably prevent undue use, as well as to speed up processing such as tabulation of records of the race.

Another obj ect of the present invention is to provide a reusable binding band for bird ring which is configured to enable a binding band for bird ring attached to a pigeon which became impossible to join a certain pigeon race, to be attached to a separate pigeon, in a case when a candidate pigeon to the certain pigeon race cannot join the race with some what reason.

To achieve the above objects, the present invention adopts a basic technical structure shown below.

Note that a binding band for bird ring of the present invention comprises a first member which including a body part constructed from a narrow-width band body or a striped body having a predetermined length and width, and being provided with an information processing device enabling to store predetermined information and to transmit/receive the information on at least a part of the body part, and the second member which including the body part constructed from a narrow-width band body or a striped body having a predetermined length and width and at least another part of the body part thereof being configured so that it can be irreversibly engaged with one end portion of the first member via a suitable engagement member, wherein the first and second members are configured so that the first member and the second member are respectively attached to either one of an external surface and an inner surface of the bird ring and both members being serially and irreversibly connected with each other so as to circularly sandwich the bird ring.

More specifically, the binding band for bird ring of the present invention, comprises, a first member which including a body part constructed from a narrow-width band body or a striped body having a predetermined length and width, and being provided with an information processing device enabling to store predetermined information and to transmit/receive the information on at least a part of the body part and further provided with an engagement member which can be engaged with an insertion end portion provided on a second member, on at least one end portion of the body part, and a second member which including the body part and being provided with the insertion end portion which can be irreversibly engaged with the engagement member provided on one end portion of the first member, on at least a part of the body part, and further wherein the first and second members are configured so that the first member and the second member are respectively attached to either one of an external surface and an inner surface of the bird ring and both members being serially connected with each other so as to circularly sandwich the bird ring.

Further, in another embodiment of the present invention, the binding band for bird ring comprises the basic technical features as mentioned above and further it is configured so that an engagement member having a hollow insertion passage part into which at least a part of the insertion end portion provided on at least one end portion of the second member should be inserted, is provided on at least one end portion of the first member, and further wherein an engagement attaching part with which the insertion end portion of the second member is irreversibly engaged, is provided inside of the insertion passage part of the engagement member.

In addition, in the above-mentioned binding band for bird ring of the present invention, the engagement attaching part is provided with a stopper part, and being configured so as to engage with a locking part provided on the insertion end portion formed in the second member.

Since the binding band for bird ring and the bird ring structure in the present invention adopts the above-mentioned technical structure, a binding band for bird ring which has the following advantage is obtained such as construction is simple and inexpensive, fitting to the bird ring is easy, but detachment thereof is not easy, and not only reliable and easy recognition of individual birds, but also error-free reception, storage, and transmission of information about a race or records thereof are possible, thereby allowing verification of data on the race reliably in a short time so that it becomes possible to reliably prevent undue use thereof, as well as to speed up processing such as tabulation of records of the race.

Further in the present invention, since a connection formed between the first and the second members can be easily disconnected at a portion in the vicinity of a joint connection portion formed therebetween, this fact makes it possible to reuse the binding band for bird ring.

### Brief Description of Drawings

FIG. 1 is a diagram showing a configuration of a concrete example of a binding band for bird ring of the present invention.
FIG. 2 is a perspective view illustrating a method of fitting the binding band for bird ring of the present invention to a bird ring.
FIG. 3 is a perspective view illustrating another method of fitting the binding band for bird ring of the present invention to the bird ring.
FIG. 4 is a sectional view showing a state in which the binding band for bird ring of the present invention is fitted to the bird ring.
FIG. 5 is a diagram showing a configuration example when an information processing part is fitted to the binding band for bird ring of the present invention.
FIG. 6 is a block diagram showing a configuration example of the information processing part of the present invention.
FIG. 7 is a perspective view showing preferred structure examples of the bird ring of the present invention.
FIG. 8 is diagram showing a concrete example of a manufacturing method of the binding band for bird ring of the present invention.
FIG. 9 is a diagram showing a configuration of a concrete example of a binding band for bird ring in a second embodiment of the present invention.
FIG. 10 is a diagram showing a configuration of a concrete example of a binding band for bird ring in a third embodiment of the present invention.
FIG. 11 is a schematic view showing a method for attaching the binding band for bird to the bird ring in the third embodiment of the present invention.
FIG. 12 is a schematic view showing one embodiment of a second member of the binding band for bird in the third embodiment of the present invention.
FIG. 13 is a schematic view showing a method for attaching and detaching the binding band for bird to and from the bird ring in the third embodiment of the present.

### Detailed Description of the present Invention

A specific embodiment of the binding band for bird ring and the bird ring structure of the present invention will be described in detail below with reference to drawings.

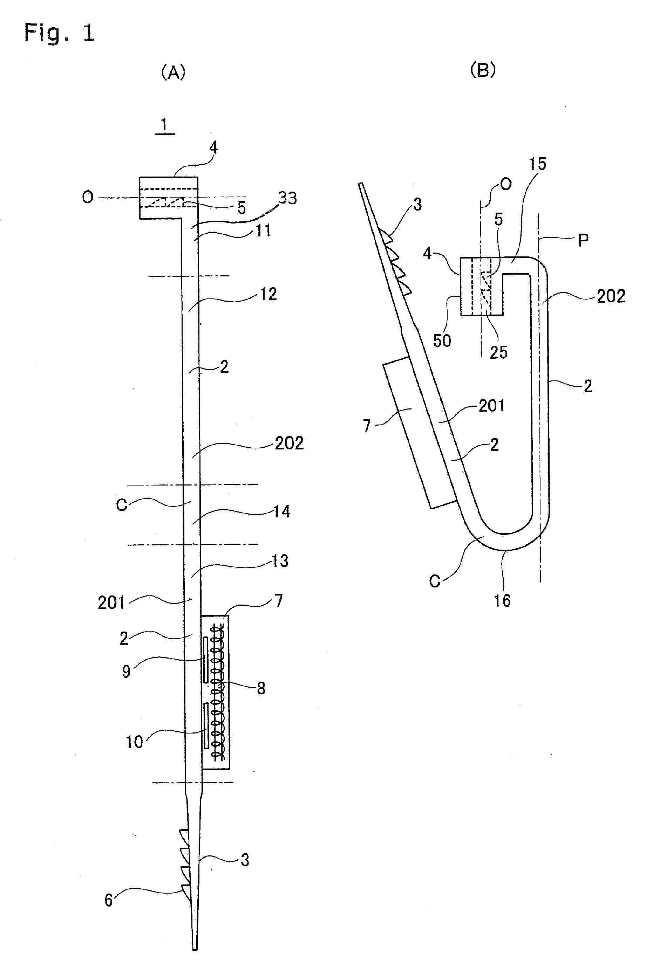

That is, FIG. 1 (A) is a diagram showing a structure of a specific example of a binding band for bird ring 1 of the present invention, and which shows in the diagram, a first member 201 which including a body part 2 constructed from a narrow-width band body or a striped body having a predetermined length and width, and being provided with an information processing device 7 enabling to store predetermined information and to transmit/receive the information on at least a part of the body part 2, and the second member 202 which including the body part 2 constructed from a narrow-width band body or a striped body having a predetermined length and width and at least another part 33 of the body part 2 thereof being configured so that it can be irreversibly engaged with one end portion 3 of the first member 201 via a suitable engagement member 4 which being a suitable locking part, wherein the first and second members are configured so that the first member and the second members 201, 2, 202 are respectively attached to either one of an external surface and an inner surface of the bird ring 30 and both members being serially and irreversibly connected with each other so as to circularly sandwich the bird ring.

In the first embodiment of the present invention as shown in Fig. 1 (A), the binding band for bird ring 1 in which an one end of the first body part 201 and an one end of the second body part 202 are serially connected to each other so as to form an integrated configuration, is shown.

Note that, more specifically, in this embodiment, the binding band for bird ring 1 of the present invention comprises;
the first member 201 which includes a body part 2 constructed from a narrow-width band body or a striped is a striped body having a predetermined length and width, and being provided with an information processing device 7 enabling to store predetermined information and to transmit/receive the information on at at least a part of the body part 2,and further wherein it is provided with a locking part 6 which can be engaged with a suitable engagement member 4 which is provided at one end portion of the second member 202, and;
the secondmember 202 which includes a body part 2 constructed from a narrow-width band body or a striped body having a predetermined length and width, and being provided with a suitable engagement member 4 at at least one portion 3 of the body part 2 and which can be irreversibly engaged with the locking part 6 provided at one end portion of the first member 201,
and further wherein, the first and second members 201, 202 are configured so that the first member and the second members 201, 202 are respectively attached to either one of an external surface and an inner surface of the bird ring 30 and both members being serially and irreversibly connected with each other so as to circularly sandwich the bird ring.

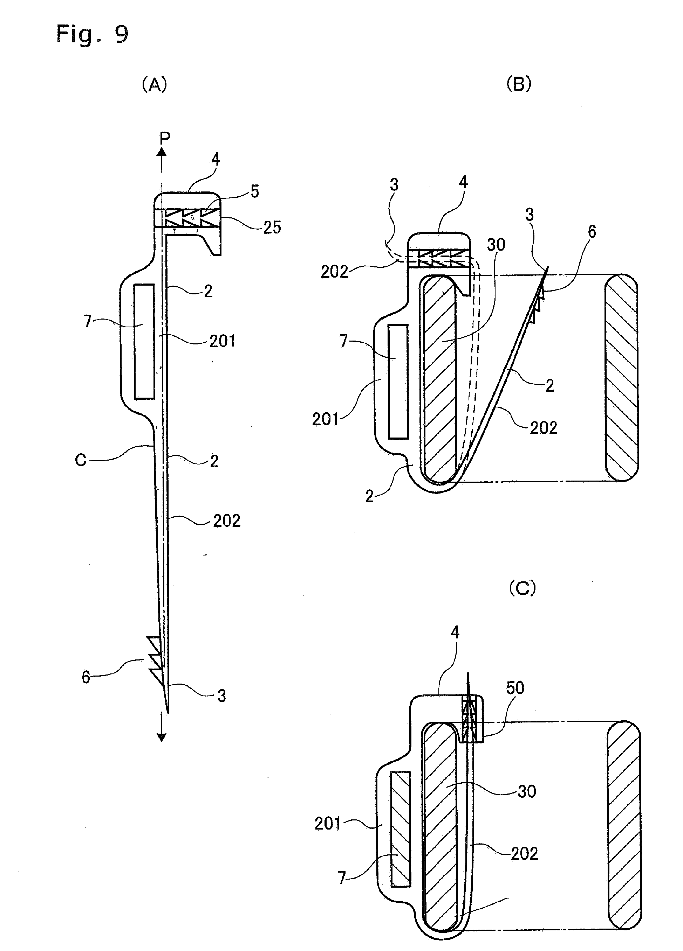

More specifically, as shown in Fig. 9(A), in first embodiment of the present invention, the binding band for bird ring 1 has a configuration in that an one end of the first body part 201 and an one end of the second body part 202 are serially connected to each other and at an open end portion of the first member 201 the insertion end portion 3 is provided and simultaneously therewith, an information processing device 7 enabling to store predetermined information and to transmit/receive the information is provided on at least a part of the first member 201.

On the other hand, at an open end portion of the second member 202, the engagement member 4 having a hollow insertion passage part 25 into which at least one part of an insertion end portion 3 provided on the open end portion of the first member 201 is inserted and which can irreversibly secure the insertion end portion 3 of the second member 201.

Note that, the engagement member 4 is provided with the hollow insertion passage part 25 and inside the hollow insertion passage part 25, an engagement attaching part 5 which can irreversibly secure the insertion end portion 3 of the first member 201, when the insertion end portion 3 is inserted into the insertion passage part 25.

On the other hand, a locking part 6 which can engage with the engagement attaching part 5 is provided on the insertion end portion 3 of the first member 201.

That is, the binding band for bird ring 1 of the present invention is a binding band having an information processing function and that can easily be fitted afterward to a bird ring 30 having an external shape standardized by international standards.

Certain identification numbers (ID numbers) must be given to birds used for races, as described above, and such identification numbers are normally to be marked on the surface of the bird ring 30.

Particularly for each one of pigeons for races (racing pigeon), the bird ring 30, which is an internationally standardized bird ring issued by a respective country in which the pigeon was born and has an identification number (IDnumber) specified for the pigeon, must be put on the leg thereof by the eighth day after its birth for identification.

Such a bird ring 30 is a so-called family register of the pigeon.

Meanwhile, the pigeon race has become by now popular and, as described above, currently a ring or identification tool including, for example, an IC chip containing memory with a transmitter is worn on a leg opposite to the leg on which the bird ring 30 is worn, depending on an object of a race and the pigeon can join the race.

Such a ring or identification tool including an IC chip or the like containing memory with a transmitter therein is generally fitted to a leg of the racing pigeon by the fifth month after birth of the pigeon.

At this time, known as a coupling, in addition to the ID number of the racing pigeon recorded on the bird ring 30 of the pigeon, a serial number of the bird ring or identification tool to be worn later are normally written into a memory part of the bird ring or identification tool worn later, and further a race number set for each predetermined race and secret code and the like of the racing pigeon set for each race are written into the memory part.

A ring or identification tool including an IC chip or the like containing memory with a transmitter is constructed so that the ring or identification tool can communicate with an information correcting and processing system associated with the pigeon race that is provided by a sponsor of a pigeon race and internationally standardized, thereby allowing, for example, in response to an interrogation signal transmitted from the information correcting and processing system associated with the pigeon race, transmission of correct information in responding to the interrogation signal from among various kinds of information contained in the memory to the relevant system.

Meanwhile, a total length for sum of the length of the first member 201 and the length of the second member 202 in the binding band for bird ring 1 of the present invention is not specifically limited, but it may be at least twice the height of the internationally standardized bird ring 30, preferably be at least 2.2 times the height thereof, including a central connection portion C.

Note that, in the present invention, a length of the insertion end portion 3 is necessary to be not less than 10 mm, taking an easy operation for inserting it into the engagement member into account.

The body part 2 which comprises the first member 201 and the second member 202 is constructed from a narrow-width band body or a striped body and a cross section thereof is not specifically limited, but considering stability with the bird ring 30, the body part 2 desirably has a cross sectional shape selected from flat, circular, elliptic, rectangular, or deformed shapes thereof.

Further, an apparent width of the body part 2 which comprises the first member 201 and the second member 202 in the present invention, is preferably 5 mm or less.

Since, in the present invention, the binding band for bird ring 1 is fitted to the bird ring 30 within five months after birth of the racing pigeon, as described above, size of legs of the racing pigeon is thin and a space is still presented between an inner peripheral wall of the bird ring 30 and the leg of the racing pigeon, but the binding band for bird ring 1 is preferably as narrow as possible to make insertion easier.

On the other hand, when the binding band for bird ring 1 of the present invention is attached to the bird ring 30, as shown in Fig. 1, the engagement member 4 provided on the open end portion of the second member 202 is inserted into a space formed between the bird ring 30 and a leg portion of the racing pigeon from a lower end portion of the bird ring 30 and thereafter, the engagement member 4 is withdrawn from an upper end portion of the bird ring 30 so as to hook the engagement member 4 on the upper end portion of the bird ring 30.

Then, the insertion end portion 3, which is the open end portion of the first member 201, is inserted into the hollow insertion passage part 25 of the engagement member 4 so as to be securely engaged.

While, as an alternative way of the present invention, the insertion portion 3 provided on the open end portion of the first member 201 is inserted into a space formed between the bird ring 30 and a leg portion of the racing pigeon from an upper end portion of the bird ring 30 and thereafter, with hooking the engagement member 4 on the upper end portion of the bird ring 30, the insertion end portion 3 is withdrawn from the space formed between the bird ring 30 and a leg portion of the racing pigeon and the insertion end portion 3 is bent followed by inserting the insertion end portion 3 which is the open end portion of the first member 201 into the hollow insertion passage part 25 of the engagement member 4 provided on the second member 202 so that the insertion end portion 3 is fixedly engaged with the engagement member 4 of the second member 202.

The length of the first member 201 and that of the second member 202 which being shown as an areas 13 and 12, respectively, formed on both sides of the approximate central part C of the body part 2 in FIG. 1 are set to have approximately the same length with each other, and the length thereof is desirably set to be equal to or a little longer than the height of the bird ring 30.

The area 12 of the second member 202 corresponding to the body part 2 is, as described later, a portion thereof that is arranged approximately vertically with respect to an upper end plane of the bird ring 30 along an inner wall surface of the bird ring 30, while the area 13 of the first member 201 corresponding to the body part 2 is, as described later, a portion that is arranged approximately vertically along an external wall surface of the bird ring 30, and the information processing part 7 described above is mounted on a surface opposite to a portion of the body part 2 facing to the external wall surface of the bird ring 30.

Further, an area 14 including the central part C of the body part 2 in the present invention is also preferably formed, as shown in FIG. 1(B), into a bending shape or a curving shape 16 by a suitable molding process to make a fitting operation of the binding band for bird ring 1 to the bird ring 30 easier, and according to circumstances, the area 14 is also desirably formed more thinly or narrowly than other portions of the body part 2.

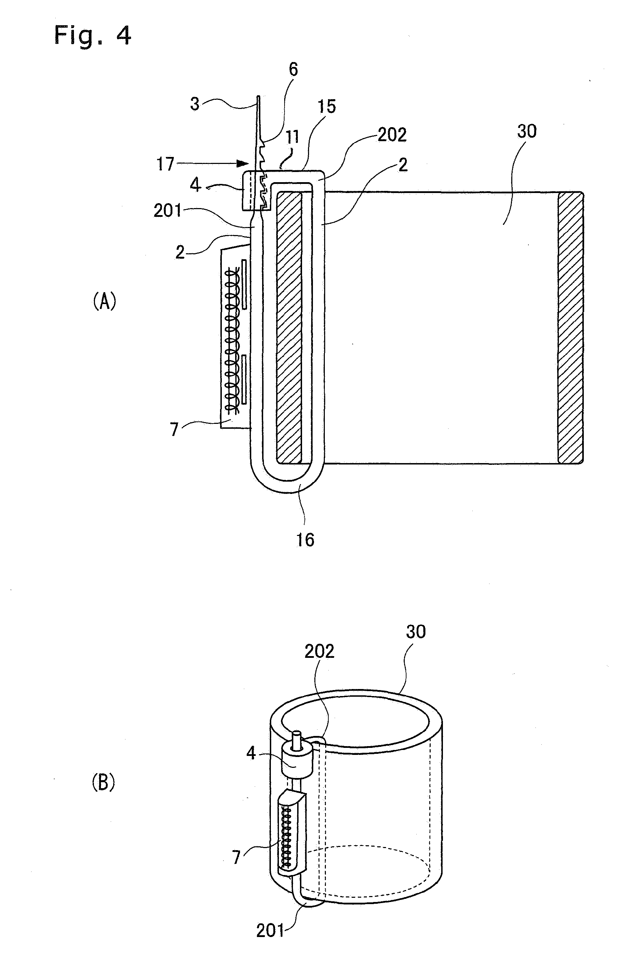

An area 11 closer to the engagement attaching part 4 of the body part 2 in the present invention is, on the other hand, as shown in FIG. 1 (B) and FIG. 4, desirably bent or curved 15 so that a center axis O of the engagement attaching part 4 in a longitudinal direction and a center axis P of the body part 2 in the longitudinal direction are approximately parallel to make an engagement state of the binding band for bird ring 1 and the bird ring 30 more stable.

Therefore, the area 11 is also desirably formed more thinly or narrowly than other portions of the body parts 2.

In the present invention, the body part 2 may be molded to be linear by a die, as shown in FIG. 1(A), and then a bending portion or curving portion 15 or 16 is molded into a predetermined bending shape portion or curving shape portion by heat molding using a suitable jig, or it can be formed by using a die that forms a bending portion or curving portion of the body part 2 directly.

Namely, in the present invention, the body part 2 is desirably structured so as to be fixed to the bird ring 30 by being bent so that the body part 2 sandwiches front-side and rear-side walls of the bird ring 30.

Also, the insertion end 3 in the present invention is formed by extending with a predetermined length from the one end of the body part 2 in an outer direction along the center axis P of the body part 2 in the longitudinal direction, and the length thereof is not particularly limited, but as described later, is at least twice the length of the engagement attaching part 4 in an axis direction 0 and preferably at least three times to make an inserting operation of the insertion end 3 to be inserted into the insertion passage part 25 of the engagement attaching part 4 easier.

Further, the insertion end 3 is desirably formed more narrowly or thinly than the body part 2.

The insertion end 3 in the present invention has a locking part 6 that irreversibly engages with a stopper part 5 provided inside the hollow insertion passage part 25 of the engagement attaching part 4.

The shape or structure of the stopper part 5 and locking part 6 used in the present invention is not particularly limited and any structure can be adopted as long as the insertion end 3 can easily be inserted into the engagement attaching part 4 by passing the stopper part 5 provided in the insertion passage part 25 of the engagement attaching part 4, but cannot be pulled back.

An example in which the serrated locking part 6 is provided on the insertion end 3 and the corresponding serrated stopper part 5 is provided inside the insertion passage part 25 is shown as a concrete example in FIG. 1.

In a concrete example in FIG. 2, on the other hand, an example in which the serrated locking part 6 is provided on the insertion end 3 and the corresponding skew L-shaped stopper part 5 is provided inside the insertion passage part 25 is shown.

Also, in a concrete example in FIG. 3, an example in which the locking part 6 composed of a skirt-shaped blade part is provided on the insertion end 3 and the corresponding disk-like stopper part 5 having a circular opening is provided inside the insertion passage part 25 is shown.

In the binding band for bird ring 1 in the present invention, the body part 2, the insertion end 3, and the engagement attaching part 4 are preferably molded integrally using a suitable synthetic resin, for example, a known synthetic resin such as a nylon resin, polyester resin, polypropylene resin, polyurethane resin, or conventional engineering plastics such as, for example, polycarbonate resin.

Next, in the present invention, the information processing part 7 is provided in the area 13, which is a portion of the body part.

As described above, the information processing part is desirably mounted on the body part 2 in an orientation so that the information processing part 7 is not directly in contact with an external surface of the bird ring 30.

That is, the information processing part 7 is desirably fitted to the body part 2 so that, when the binding band for bird ring 1 is fitted to the bird ring 30, the information processing part 7 is positioned on an outer side of the body part 2 when viewed from the outer wall surface of the bird ring 30.

Further, the information processing part 7 used in the present invention is desirably comprised of an antenna part 8 containing a coil, a storage part 9 for storing predetermined information, a transmission/reception circuit having a function of receiving the predetermined information via the antenna part 8 or transmitting the predetermined information to the outside via the antenna part 8, and a control means 10 for controlling driving of the circuit.

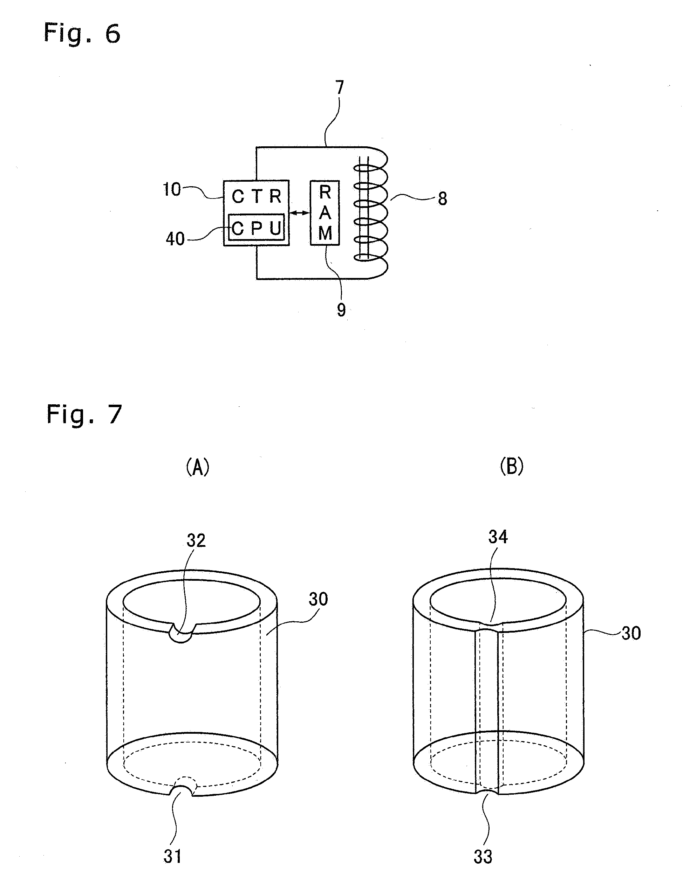

Specifically, for example, as shown in FIG. 6, the information processing part 7 has a configuration in which a control circuit 10 containing a CPU 40 and the transmission/reception circuit (not shown), is connected to the antenna part 8, which is composed of the coil, and the storage part 9, which is composed of RAM or the like that can perform read and write operations at any time, is connected to the control circuit 10 so that it becomes possible, through operation processing of the control circuit 10 by the CPU 40, to store predetermined information transmitted from the outside in the storage part 9 by driving the transmission/reception circuit and to read interrogated information from among the information stored in the storage part 9 in response to a interrogating signal from the outside and to transmit the interrogated information to the outside.

That is, in the present invention, the information processing part 7 also desirably comprises a memory integrated IC chip with a transmitter.

In the present invention, the information processing part 7 is also preferably formed into an extremely small IC chip with the thickness of 1 to 2 mm and the width and length of several mm.

An external system from which the information processing part 7 receives instructions includes, as described above, a communication system prepared by a pigeon race sponsor and whose standards are preset.

On the other hand, a structure or method by which the information processing part 7 is mounted in a predetermined region, that is, the above-described area 13 of the body part 2 is not particularly limited, and the minimized information processing part 7 can be mounted by using a means of fusing, adhesion, insertion or the like.

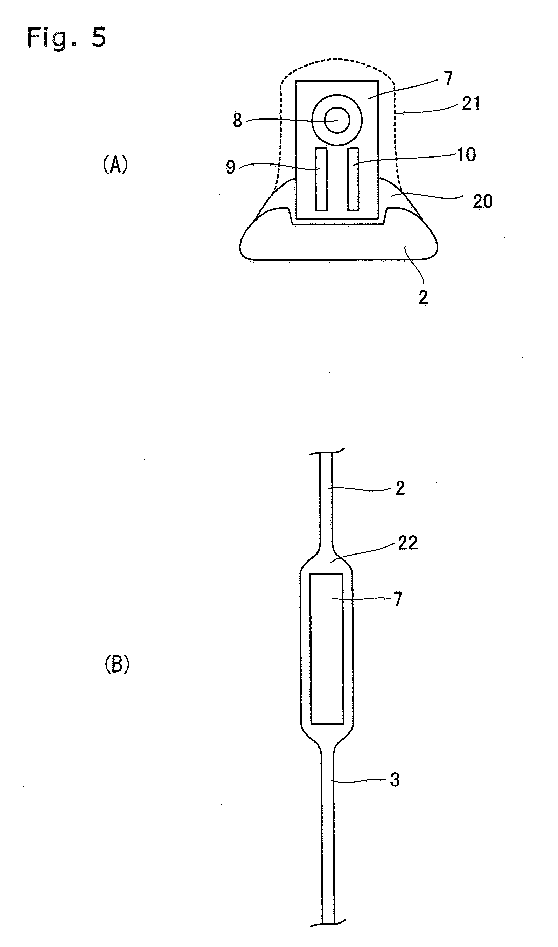

More specifically, as shown in FIG. 5(B), the width of a portion of the body part 2 where the information processing part 7 should be mounted may be made wider than other portions of the body part 2 or the thickness of the portion thicker to form a groove portion or a cavity portion for mounting the information processing part 7 in the portion.

Further, in the present invention, the information processing part 7 is also desirably mounted so that a base periphery of a fitting part is coated with a suitable sealant 20 or the entire fitting part is completely coated with a suitable sealant 21 to reinforce the fitting part or prevent infiltration of outside air, water and the like when mounting the information processing part 7 on the body part 2, as shown in Fig. 5(A).

In the present invention, in order to fit the binding band for bird ring 1 to the bird ring 30, the insertion end 3 of the binding band for bird ring 1 is first passed through a space part between the bird ring 30 and a leg of a racing pigeon, the insertion end 3 that has passed through the bird ring 30 is bent toward the engagement attaching part 4 and moved to cause the insertion end 3 to be inserted into the insertion passage part 25 from one end of the engagement attaching part 4, and, as shown in FIG. 4(A), a tip part of the insertion end 3 is pulled out from another end of the insertion passage part 25 of the engagement attaching part 4 and fixed.

This makes the binding band for bird ring 1 securely fixed to the bird ring 30 so that the binding band for bird ring 1 will not be detached.

At this point, if the tip part of the insertion end 3 is projected from the opposite end of the insertion passage part 25 of the engagement attaching part 4, it can be cut off, for example, at a portion 17, as shown in FIG. 4(B), inconvenience while in use can be avoided and, at the same time, security against undue use can be enhanced.

Therefore, it is also desirable, for example, to provide a cut line or make the thickness of the portion 17 thinner so that the portion 17 of the insertion end 3 can be cut easily.

On the other hand, when the binding band for bird ring 1 is fitted, as shown in FIG. 7, in order for the binding band for bird ring 1 to be positioned stable on the bird ring 30, the bird ring 30 used in the present invention desirably has cavity portions or groove portions 31 and 32 provided at least at one of an upper edge and a lower edge of the bird ring 30 in which the body part 2 can be held, or cavity portions or groove portions 33 and 34 provided in a portion at least on one of the outer wall and inner wall of the bird ring 30 where at least a portion of the body part 2 can be fitted and held on the bird ring 30.

Needless to say, each of the above cavities portions or groove portions can be provided together.

In the present invention, information stored in the storage means 9 is not particularly limited and can be determined in accordance with capacity of the storage means 9, and the storage means 9 with a larger storage capacity should be selected depending on a required amount of information.

Specifically, when a pigeon race is held, for example, information about the identification number (that is, the so-called ID number assigned to a pigeon immediately after the pigeon is born) of individual racing pigeons, which has normally nine digits, serial number of the information processing part 7 including the storage means 9, race name of a specific pigeon race, secret code for the race, owner name of the racing pigeon, name of the club to which the owner belongs and the like is stored.

Since an identification number of each pigeon remains the same while the pigeon is alive, as described above, the identification number is preferably stored using a storage means composed of a storage means that cannot be rewritten such as ROM.

Similarly, the above serial number of the information processing part 7 is desirably to be stored in a storage means composed of ROM.

The other information described above is desirably storedusing a storage means composed of a storage means that can perform write, delete, and read operations such as RAM.

The above mentioned information are to be stored in the storage means 9 when the binding band for bird ring 1 is fitted to the bird ring 30.

Then, the storage means 9 of the information processing part 7 is caused to store all above information by a time immediately before a pigeon race is started, and when a predetermined racing pigeon reaches a goal during the pigeon race, an interrogation signal is transmitted to the information processing part 7 carried by the pigeon from a communication processing device (not shown) prepared by the sponsor, and the information processing part 7 analyzes the interrogation signal received by the antenna 8 using the control device 10 to respond to the interrogation signal and transmits information requested by the interrogation signal, for example, information about the identification number of the relevant racing pigeon, serial number, race name of the pigeon race, secret code for the race, departure time, return time, owner name of the racing pigeon, and name of the club to which the owner belongs to the information processing device.

Based on such a response signal, the communication-processing device verifies the time of arrival of each pigeon and automatically calculates a flying time from a departure point to record information thereof.

The binding band for bird ring 1 of the present invention can be fitted to the bird ring 30 of the racing pigeon at any time regardless of the age of the pigeon, but it is desirable, as described above, to fit the binding band for bird ring 1 basically within five months after the pigeon is born.

Then, it is also desirable to bind the binding band for bird ring 1 by winding the binding band for bird ring 1 around the bird ring 30 put on the living pigeon so that the body part 2 is arranged on the outside the bird ring 30 and in a longitudinal direction thereof, thereby causing the information processing part 7 to be in a vertical direction with respect to the ground or a landing stand when the racing pigeon is in a normal standing pose.

By adopting such a fitting method, chances of information processing part 7 being contaminated by excrements and the like of the pigeon can be reduced.

Once the binding band for bird ring 1 of the present invention is once fitted to the bird ring 30, the insertion end 3 at the tip part of the body part 2 will not be detached from the bird ring 30 unless the insertion end 3 is damaged in use or cut intentionally because the insertion end 3 is structured not to be pulled out of the engagement attaching part 4, and therefore, undue use thereof such as the binding band for bird ring 1 in use being removed to be fitted again to a bird ring 30 of another racing pigeon, can be prevented.

That is, the binding band for bird ring 1 of the present invention can be fitted to the bird ring 30 easily, as described above, but a cutter or the like must be used to cut a portion of the body part 2 of the binding band for bird ring 1 to remove the binding band for bird ring 1.

Since the binding band for bird ring 1 whose body part 2 has been cut can no longer be wound again around the bird ring, wrongdoing such as using information stored in the binding band for bird ring 1 for other pigeons can completely be prevented.

That is, only new products of the binding band for bird ring 1 of the present invention are in practically used.

In other words, the binding band for bird ring 1 of the present invention has advantages of being able to prevent injustices of pigeon races, while providing convenience of being able to perform a wearing operation easily and performing information processing easily.

Meanwhile, if in the present invention the owner of a racing pigeon changes or the binding band for bird ring 1 having a memory integrated IC chip with a transmitter of a different system is used, the body part 2 of the binding band for bird ring 1 can intentionally be cut to replace the binding band for bird ring 1 with the binding band for bird ring 1 having a new memory integrated IC chip with a transmitter.

At the present stage, specific frequencies are defined as an international standard for the information processing device used for the pigeon race, and therefore, the control part 10 including the antenna part 8 and the microcomputer 40 as a processing unit in the information processing part 7 in the present invention desirably contain standards corresponding to the relevant frequencies and, for example, "Hitag2" manufactured by Philips is generally used.

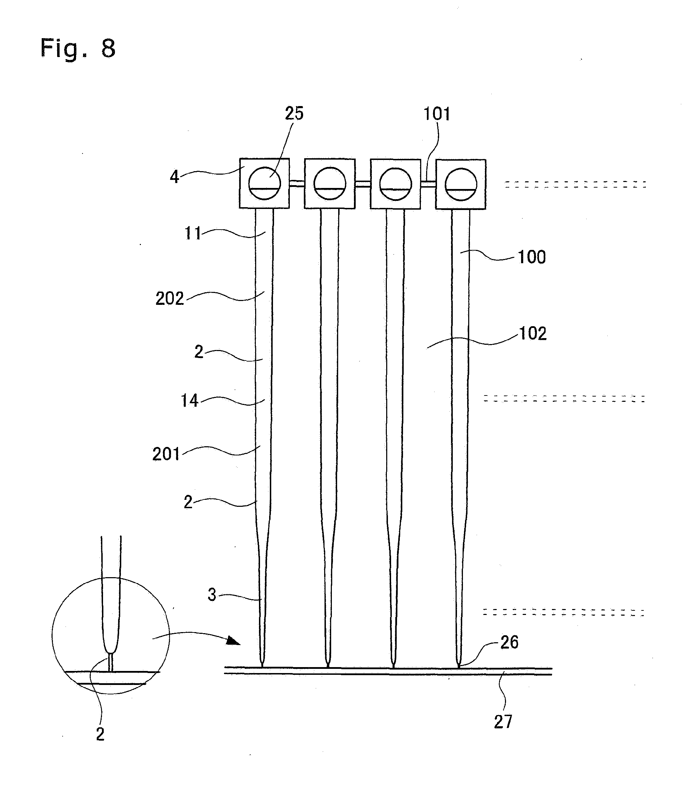

A method of manufacturing the binding band for bird ring 1 of the present invention will be illustrated with reference to FIG. 8. A sheet-shaped part 102 in a form in which a plurality of binding band elements for bird ring 100 of the present invention are arranged in parallel closely and continuously in a lateral direction is molded using a suitable die.

In this case, side parts of the engagement attaching parts 4 adjacently arranged side by side are connected to each other by a suitable connection part 101 and the tip part of the insertion end 3 is fixed by arranging a linking bar part 27 having a suitable size at the tip part of the insertion part 3 and arranging a linking part 26 having a suitable length between the tip part of the insertion end 3 and the linking bar part 27.

By adopting such a configuration, the sheet-shaped part 102 can be transported in a stable state to a subsequent process.

Then, the binding band for bird ring 1 of the present invention is completed by mounting the information processing part 7 having a suitable structure in a region of the area 13 of individual body parts 2 by using a suitable robot device or the like and applying heating treatment or adhesion treatment.

Further, if necessary, it is also desirable to mold and fix the portions of the area 11 and/or area 14 in the body part 2 of each body part element obtained by using the manufacturing method shown in FIG. 8 in a curving shape as shown in FIG. 1 (B) individually or two or more body part elements simultaneously using a suitable jig or die.

Further, a second embodiment of the binding band for bird ring 1 of the present invention will be explained hereunder, with reference to drawings.

Note that the binding band for bird ring 1 of the second embodiment of the present invention basically has a configuration being similar to that of the first embodiment of the present invention and as shown in Fig. 9, the first member 201 and the second member 202 are serially connected with each other at one of its end portions of each one of the members so that both members 201 and 202 are integrated into one body.

However, in the second embodiment, the first member 201 is provided with the information processing part 7 as well as being provided with the engagement member 4 at a free end portion of the body part 2 of the first member 201.

On the other hand, in the second embodiment, an insertion end portion 3 is provided at a free end portion of the body part 2 of the second member 202.

Note that the binding band for bird ring 1 of the second embodiment of the present invention, as shown in Fig. 9, one of the end portions of the first member 201 and one of the end portions of the second member 202 are mutually connected with each other and at the free end portion of the first member 201 the engagement member 4 is provided, as well as on at least one portion the first member 201, the information processing device 7 enabling to store predetermined information and to transmit/receive said information , while at the free end portion of the second member 202, the insertion end portion 3 is provided.

Accordingly, in the second embodiment of the present invention, the engagement member 4 of the first member 201 is configured to have a hollow insertion passage part 25 into which at least a part of the insertion end portion 3 provided on the free end portion of the second member 202 is inserted, and to irreversibly hold the part of the insertion end portion 3 inside the hollow insertion passage part 25.

Note that, in the second embodiment of the present invention, especially, the binding band for bird ring 1 is configured so that it can be easily attached to a bird ring 30 when it should be added on the bird ring 30 even in a case in which a gauge W formed between an inside surface of the bird ring 30 and a surface of a leg of a pigeon is extremely narrow.

More specifically, it is designed so that at first, the insertion end portion 3 of the second member 202 is inserted into the gauge W formed between an inside surface of the bird ring 30 and a surface of a leg of a pigeon and then the insertion end portion 3 is inserted into the hollow insertion passage part 25 of the engagement member 4 provided on the first member 201 so that the insertion end portion 3 of the second member 202 and the engagement member 4 are mutually and irreversibly secured with each other.

Note that, another configurations of the second embodiment of the present invention are substantially similar to those of the first embodiment.

Further note that in the second embodiment, as shown in Fig. 9(C), the engagement member 4 of the first member 201 may be bent as similar way as show in Fig. 1 (B), so that an upper end portion of the bird ring 30 can be sandwiched by the engagement member 4 and the body part 2.

In this embodiment, the insertion end portion 3 of the second member 202 can be easily inserted into the hollow insertion passage part 25 of the engagement member 4.

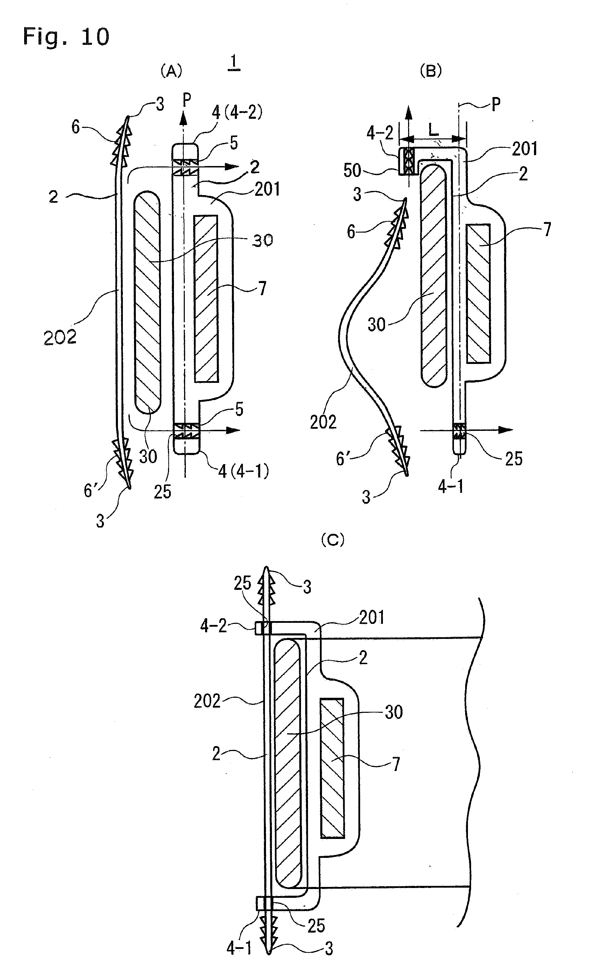

Next, a third embodiment of the binding band for bird ring 1 of the present invention will be explained hereunder, with reference to Figs. 10 to 15.

The configuration of the binding band for bird ring 1 of this embodiment is such that the binding band for bird ring 1 comprises, a first member 201 which includes a body part 2 constructed from a narrow-width band body or a striped body having a predetermined length and width, and being provided with an information processing device 7 enabling to store predetermined information and to transmit/receive the information on at at least a part of the body part 2, and further wherein it is provided with an engagement member 4 on at least one of the end portions of the body part 2 which can be engaged with the insertion end portion 3 of the second member 202, and a second member 202 which includes a body part 2 constructed from a narrow-width band body or a striped body having a predetermined length and width, and being provided with a suitable insertion end portion 3 at at least one of the end portions of the body part 2 and which can be irreversibly engaged with the engagement member 4 provided at one end portion of the first member 201, and further wherein, the first and second members 201, 202 are configured so that the first member and the second member 201, 202 are respectively attached to either one of an external surface and an inner surface of the bird ring 30 and both members being serially connected with each other so as to circularly sandwich the bird ring 30, and further wherein, the first member 201 and the second member 202 is configured so as to be independent from each other.

The configuration of the binding band for bird ring 1 of the third embodiment will be explained more precisely, hereunder.

First, as shown in Fig. 10, the first member 201 of the binding band for bird ring 1 is preferably provided with the engagement members 4(4-1, 4-2) each having an insertion passage part 25 inside of which an engagement attaching part 5 being provided, at both end portions of the body part 2.

Further, in this embodiment, as shown in Fig. 10(A), at least one of both engagement members 4 (4-1, 4-2) is preferably extended externally along the longitudinal center axis P of the body part 2 and the insertion passage part 25 formed inside of the engagement member 4 is preferably crossed with the longitudinal center axis P at a predetermined angle including a right angle.

More over, in this embodiment, as shown in Fig. 10(B), at least one of both engagement members 4 (4-1, 4-2) is preferably bent from the body part 2 in a direction in which the engagement member 4 is bent so as to cross with the longitudinal center axis P at a predetermined angle including a right angle, so that it is extended perpendicularly from a side surface of the body part 2.

Further, a length L of the bent portion of the engagement member 4-2 is preferably a length being sufficient for the insertion passage part 25 to take a position which locates inside of an inside surface wall of the bird ring 30.

And it is a further preferable embodiment that a hook portion 50 which can be engaged with a peripheral end portion of the bird ring 30, is provided at a tip end portion of the engagement member 4 which has been bent and in the vicinity of the insertion passage part 25.

Note that, this hook portion 50 is also provided in the above-mentioned first and second embodiments.

Further in the third embodiment, as shown in Fig. 10(C), both of the engagement members 4 (4-1, 4-2) may be preferably bent from the body part 2 in a direction in which the engagement member 4 is bent so as to cross with the longitudinal center axis P at a predetermined angle including a right angle, so that it is extended perpendicularly from a side surface of the body part 2.

On the other hand, in this embodiment and in a case when at least one engagement member 4 is externally extended along the longitudinal center axis P of the body part 2, it is preferable that the insertion passage part 25 provided inside the engagement member 4 is designed so that the insertion passage part 25 is projected beyond an upper peripheral end portion of the bird ring 30 or below a lower peripheral end portion of the bird ring 30.

Note that, in this embodiment, an operator inserts the both tip end portions 3 corresponding to the insertion end portion of the body part 2 into the insertion passage part 25 of the engagement member 4 and it is apparent that the tip end portions 3 thus withdrawn from the insertion passage part 25 are cut out at an optional position 17 as shown in Fig. 4.

And further, in Fig. 10, although an engagement condition formed between the engagement attaching part 5 provided inside the insertion passage part 25 formed on each one of the engagement member 4 and each one of the locking part 6, 6' provided on the second member 202 of the body part 2 is omitted, it is apparent that it shows the configuration similar to that as shown in Fig. 9(C).

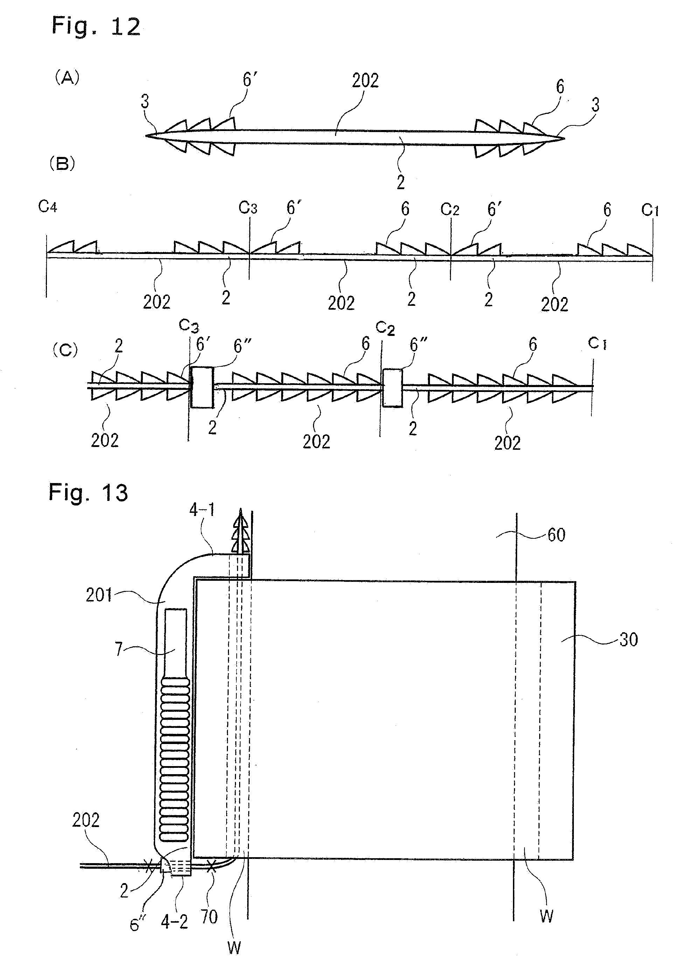

By taking the above-mentioned configuration in this embodiment, it becomes possible to insert the tip end portions of the second member 202 into inside the insertion passage part 25 formed in each one of the engagement member 4 easily, as well as, if necessary, as shown in Fig. 13, it becomes possible to easily cut a portion 70 formed between the engagement member 4 of the second member 202 and the peripheral end portion of the bird ring 30 with utilizing a suitable cutting means.

On the other hand, although a configuration of the engagement attaching part 5 such as a stopper means or the like, provided inside the insertion passage part 25 formed in the engagement member 4, is not specifically restricted, it is preferable that a configuration thereof by which the second member 202 can be irreversibly fixed, should be adopted with taking an insertion direction of the second member 202 and the configuration of the locking part 6 of the second member 202 into account.

In addition to thereabove, in this embodiment, as shown in Fig. 12(A), a configuration in which two locking parts 6, 6' , each having an irreversible engagement direction being different from each other are provided at least at both end portions, which corresponding to the insertion end portion 3 of the second member 202 of the body part 2 or in the vicinity thereof, respectively, is preferably adopted and as an alternative way, as shown in Fig. 12(B), the body part 2 of the second member 202 can be provided with a plurality of locking parts 6, 6' , each having an irreversible engagement direction being different from each other and being alternately and serially arranged along the longitudinal direction of the second member 202.

In this embodiment, the second member 202, which is produced longitudinally, can be cut with having a predetermined length at every time when it is required and can be used in cooperation with the first member 201.

Note that a region indicated by C1 and C2, by C2 and C3 and by C3 and C4, for example, as shown in Fig. 12(B) correspond to an unit length of the body part of the second member 202.

Although a length of the secondmember 202 is not specifically restricted, for example, when a height of the bird ring 30 is 10mm, the length thereof is preferably set at around 40 to 70 mm with including an additional length of 15 to 30 mm which can be added to both peripheral end portion of the bird ring 30 so as to make an insertion operation easy.

Note that, in the above-mentioned third embodiment, even in a case in which the gauge W formed between the bird ring 30 and a surface of a leg of pigeon became extremely narrow due to the pigeon having been grown, in order to enable the binding band for bird ring 1 of the present invention to be easily attached to the bird ring 30, the second member 202 is produced independently from the first member 201, and a fineness of the second member 202 is set at a value as fine as possible and for example, a diameter thereof is set at around 1mm or the like.

For another object of the third embodiment of the present invention, is to enable the information processing device 7 to be re-used when the pigeon has died of some what accident or disease causing the pigeon not to join a certain pigeon race so as to prevent the high expensive information processing device 7 including therein a chip, comprising a transponder, a memory of the like from becoming waste.

Therefore, in the third embodiment, the first member and the second member are separately produced, independently and both members are attached to the bird ring 30 first and then the second member is cut out with using a suitable cutter means so that the information processing device 7 is easily separated from the bird ring 30.

After that, the information processing device 7 can be easily re-attached to a separate bird ring 30 of a separate pigeon with utilizing a separate second member.

Now, in the third embodiment of the present invention, the engagement member 4 is provided on both end portions of the first member 201 and as the second member 202, a longitudinal string like wire member having a fine diameter and a suitable locking part 6, such as a binding string, for example, called as an "INSULOK" (Trademark) tie.

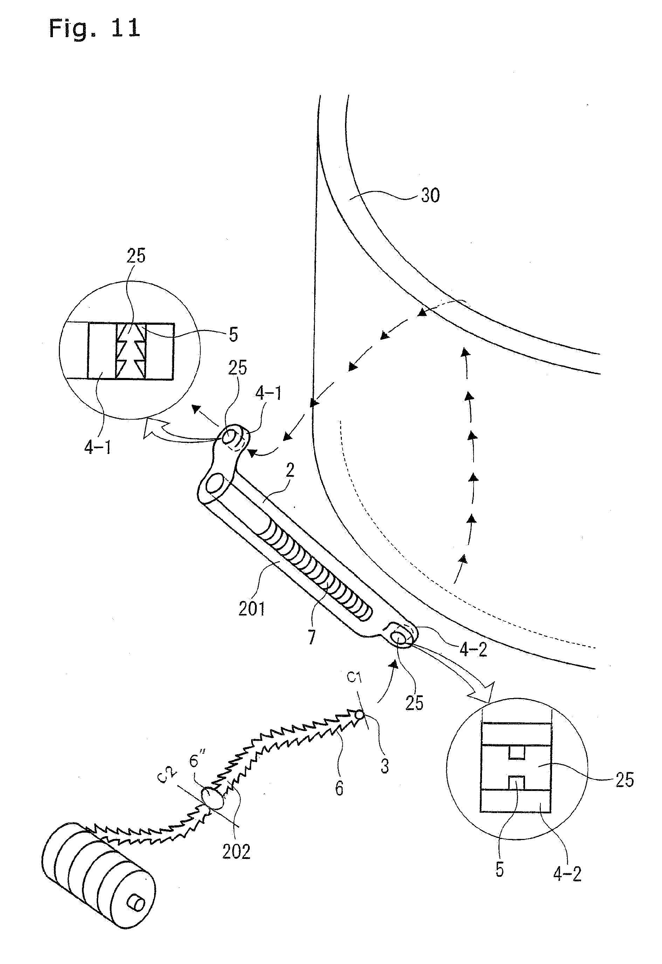

And as shown in Fig. 10, only a second member 202 which is produced from a longitudinal second member 202 by cutting it 2 with a predetermined length, for example, at around 40 to 70 mm, is penetrated through the gauge W formed between the leg of pigeon and the bird ring 30 and it is fixedly held by the first member 201 by inserting both of the insertion end portion 3 of the second member 202 into both of the insertion passage parts 25 of each of the engagement member 4, respectively or as shown in Fig. 11, a part of the second member 202 which is wound on a suitable spool or the like, is withdrawn from the spool by a predetermined length without being cut, and then the tip end portion, such as the insertion end portion 3, is inserted into and penetrated through the insertion passage part 25 provided on one of the engagement members 4-2, and after that, it is penetrated through the gauge W formed between the leg 60 of a pigeon and the bird ring 30 and finally, it is inserted into an insertion passage part 25 of the another engagement member 4-1 of the first member 201 so that both portions are fixedly secured.

In any above-mentioned embodiment, it is preferable that the tip end portions of the insertion end portions 3 of the second member 202 projected outwardly from both of the engagement members 4(4-1, 4-2) when the insertion operation was carried out, should be cut out.

Note that in the embodiment as shown in Fig. 12, it is preferable that a plurality of enlarged portions 6" are arranged along the body part 2 with a predetermined distance, as a stopper means and the second member 202 is cut out at a portion of the body part 2 just behind the enlarged portion 6".

On the other hand, when the first member 201 should be re-used, as shown in Fig. 13, the second member 202 can be cut at a portion 70 formed between one of the engagement members 4-2 of the first member 201 and an inside peripheral portion of the bird ring 30 so that the first member 201 can be easily removed from the bird ring 30.

Note that in the embodiment as shown by Fig. 11, the second member 202 may be provided with a plurality of the locking parts 6 each having an irreversible direction which being identical to each other, are uniformly arranged along the longitudinal direction of the second member 202, as shown in Fig. 12(C), as well as a plurality of the enlarged portion 6" having a diameter being larger than that of the second member 202, preferably larger than that of the locking part 6, may be arranged among the locking parts 6 with a suitable interval, for example, 40 to 70 mm.

Alternatively, it is also preferable that the locking parts 6 each having the irreversible direction which being identical to each other and the locking parts 6' each having the irreversible direction which being identical to each other but opposite to that of the locking parts 6, are arranged only at the tip end portions of the unit length portion of the second member 202, respectively (for example, the region formed between C1 and C2 or C2 and C3 or the like) or at a portion in the vicinity thereof , respectively, as shown in Figs. 12(A) and 12(B).

And further, as shown in Fig. 12(C), a portion of the second member 202 formed between the enlarged portion 6" and the most end of the locking part 6, no such locking part 6 is arranged, and further, also in a portion of the second member 202 that is a portion formed between the enlarged portion 6" and C2 or C3, it is possible to arrange a configuration formed only by the body part 2 without any such locking part 6.

The enlarged portion 6" serves as a stopper means in the locking part 6 of the engagement member 4(4-2) and although a configuration of the enlarged portion 6" is not also restricted to a specific configuration, it is preferable that the enlarged portion 6" has either one of the configuration selected from spherical, cylindrical, cubical configurations or the like.

Note that in the second members each having a configuration being identical to each other, the configurations of each one of the enlarged portions 6" are preferably identical to each other.

In an insertion operation of the second member 202 with respect to the engagement member 4(4-2), after when a predetermined length of the second member 202 has been completely inserted, it is possible to cut a portion of the second member 202 just behind the enlarged portion 6".

On the other hand, in the third embodiment, a configuration of the engagement attaching part 5 provided in the engagement member 4(4-2) may be configured to have a suitable projecting member as shown in Fig. 11.

Further the string like member used as the second member 202 can be made of any kind of material and at both end portions of the second member 202 formed by cut the longitudinal second member 202 with a predetermined length, the insertion end portions 3 are formed.

And at both of the insertion end portions 3, the locking parts 6 which can irreversibly engage with the engagement attaching part such as, for example, a stopper means 5 which is provided inside of the insertion passage part 25 of the engagement member 4 formed on the first member 201, is arranged.

Each one of the locking parts 6 should have the respective configuration each being different from each other depending upon a configuration of the engagement attaching part 5 of the engagement member 4.

For example, when the configuration of the engagement attaching part 5 of the engagement member 4 is a shape as shown in Fig. 10(A), the configuration of the locking part 6 of the insertion end portion 3 provided at both end portions of the second member 202 preferably has, for example, the configurations as shown in Fig. 12 (A) each of which having a configuration being opposite to each other.

Further, when the second member 202 has a longitudinal configuration, it can have the configuration as shown in Fig. 12(B), for example.

Of course, in the second member 202 as shown in Fig. 12(A), in a portion thereof formed between the locking part 6 and the locking part 6', it is also possible to arrange either one of the locking parts 6 and the locking parts 6' as shown in Fig. 12(B).

In a case when the second member 202 as shown in Fig. 12 (B) is used, as shown in Fig. 11, a tip end portion C1 of the second member 202 is inserted into the first engagement member 4-1 of the first member 201 and followed by penetrating the same through the inside side surface of the bird ring 30.

Thereafter, the tip end portion C1 of the second member 202 is inserted into the second engagement member 4-2 of the first member 201 and it is pulled strongly, and then a portion of the second member 202 projected from the second engagement member 4-2 is cut and at simultaneously with this operation, it is cut at the portion as defined by C2 as well as being cut a portion projected from the first engagement member 4.

## Claims

1. A binding band for bird ring, comprising:
a first member which including a body part constructed from a narrow-width band body or a striped body having a predetermined length and width, and being provided with an information processing device enabling to store predetermined information and to transmit/receive said information on at least a part of said body part, and;
a second member which including a body part constructed from a narrow-width band body or a striped body having a predetermined length and width, and being configured so that at least one portion of said main body can be irreversibly connected to at least one end portion of said first member via a suitable engaging member,
wherein said first and second members are configured so that said first member and said second member are respectively attached to either one of an external surface and an inner surface of said bird ring irreversibly and both members being serially connected with each other so as to circularly sandwich said bird ring.

2. A binding band for bird ring, comprising:
a first member which including a body part constructed from a narrow-width band body or a striped body having a predetermined length and width, and being provided with an information processing device enabling to store predetermined information and to transmit/receive said information on at least a part of said body part and further provided with an engagement member which can be engaged with an insertion end portion provided on a second member, on at least one end portion of said body part, and;
said second member which including said body part constructed from a narrow-width band body or a striped body having a predetermined length and width, and being provided with said insertion end portion which can be irreversibly engaged with said engagement member provided on at least one end portion of said first member, on at least one end portion of said body part,
wherein said first and second members are configured so that said first member and said second member are respectively attached to either one of an external surface and an inner surface of said bird ring and both members being serially connected with each other so as to circularly sandwich said bird ring.

3. A binding band for bird ring according to claim 1 or 2, wherein ,
an engaging member having a hollow insertion passage part into which at least a part of said insertion end portion provided on at least one end portion of said second member should be inserted, is provided on at least one end portion of said first member, and further wherein an engagement attaching part with which said insertion end portion of said second member is irreversibly engaged and held, is provided inside of said insertion passage part of said engagement attaching part.

4. A binding band for bird ring according to claim 2 or 3, wherein ,
said engagement attaching part which is formed inside said hollow insertion passage part of said engagement member on said first member , is provided with a stopper part, while said insertion end portion of said main body portion of said second member being provided with a locking part which can irreversibly engage with said stopper part.

5. A binding band for bird ring according to any one of claims 1 to 4, wherein said body part has a cross sectional shape selected from flat, circular, elliptic, rectangular, or deformed shapes thereof.

6. A binding band for bird ring according to any of claims 1 to 5, wherein an apparent width of said body part is 5 mm or less.

7. A binding band for bird ring according to any one of claims 1 to 6, wherein said first and second members are independently formed from each other.

8. A binding band for bird ring according to any one of claims 1 to 6, wherein said first and second members are serially connected to each other at one end portion of both members

9. A binding band for bird ring according to a claim7, wherein, said first member is provided with at least one end portion or both end portions, said engaging member having said insertion passage part in which said engagement attaching part is provided.

10. A binding band for bird ring according to claim 9, wherein at least one of both of said engagement members is extended outwardly in a direction along a longitudinal center axis of said body part thereof and a center axis of said insertion passage part provided inside of said engagement member intercrosses with said longitudinal center axis of said body part with a predetermined angle.

11. A binding band for bird ring according to claim 9 or 10, wherein at least one of said engagement members is bent from said body part so as to extend side-wardly from said body part, so that a bending direction thereof intercrosses with said longitudinal center axis of said body part.

12. A binding band for bird ring according to claim 11, wherein, a length of said bent portion of said engagement member is set at a value sufficient for said insertion passage part to be located at a position formed inwardly from an inside surface of said bird ring.

13. A binding band for bird ring according to claim 11 or 12, wherein said binding band is further provided with a hooked portion which can engage with a periphery end portion of said bird ring, on one end portion of said bent engagement members and a portion in the vicinity of said engagement member.

14. A binding band for bird ring according to claim 10, wherein, when at least one engagement member which is externally extended along the longitudinal center axis of said body part, said insertion passage part provided inside the engagement member is designed so that the insertion passage part is projected beyond an upper peripheral end portion of said bird ring or below a lower peripheral end portion of the bird ring.

15. A binding band for bird ring according to any one of claims 7 or 9 to 14, wherein, at both end portions or at the portions in the vicinity said both end portions of said second member, the locking parts are provided, respectively, and wherein a direction of an irreversible engagement of said locking part provided on one end portion of said body part of said second member is different from that of said locking part provided on an opposite end portion of said body part of said second member.

16. A binding band for bird ring according to any one of claims 7 or 9 to 14, wherein on said body part of said second member, the locking parts each having said direction of irreversible engagement being different from each other, are alternately arranged in series along a longitudinal direction of said second member.

17. A binding band for bird ring according to any one of claims 7 or 9 to 14, wherein, said second member is provided with a plurality of the locking parts each having an irreversible direction which being identical to each other and a plurality of the enlarged portion having a diameter being larger than that of the second member, are alternately arranged each other along the longitudinal direction of said second member.

18. A binding band for bird ring according to claim 8 wherein, one end portion of said first member and one end portion of said second member are integrally connected with each other via a connecting part having a predetermined length.

19. A binding band for bird ring according to claim 18 wherein, said connecting part has a length sufficient for said connecting part to able to round curvedly around said periphery edge portion of said bird ring.

20. A binding band for bird ring according to claim 18 or 19, wherein, a hook portion which can engage with said periphery edge portion of said bird ring is provided at a portion in the vicinity of an end portion of said engagement member.

21. A binding band for bird ring according to claim 18, wherein, said binding band having a configuration in which said first member and said second member are connected with each other at one of the end portions thereof, and further wherein at an open end portion of said first member, there is provided with said insertion end portion as well as being provided with said information processing device enabling to store predetermined information and to transmit/receive said information on at least a part of said body part, while at an open end portion of said second member, there is provided with said engaging member having said hollow insertion passage part into which at least a part of said insertion end portion provided on said open end portion of said first member is inserted and which can irreversibly engage and hold the same therein.

22. A binding band for bird ring according to claim 18, wherein, said binding band having a configuration in which said first member and said second member are connected with each other at one of the end portions thereof, and further wherein at an open end portion of said first member, there is provided with said engaging member as well as being provided with said information processing device enabling to store predetermined information and to transmit/receive said information on at least a part of said body part, while at an open end portion of said second member, there is provided with said insertion end portion, and further wherein said engaging member having said hollow insertion passage part into which at least a part of said insertion end portion provided on said open end portion of said second member is inserted and which can irreversibly engage and hold the same therein.

23. A binding band for bird ring according to claims 2 to 6, 8 or 17 to 22, wherein, said first member, said second member, said insertion end portion and said engaging member are molded integrally from synthetic resin.

24. A binding band for bird ring according to claims 1 to 23, wherein said information processing part is comprised of an antenna part, a storage part for storing predetermined information, a transmission/reception circuit part having a function of receiving the predetermined information via the antenna part or transmitting the predetermined information to an outside via the antenna part, and a control means for controlling an operation of the circuit part.

25. A binding band for bird ring according to claims 1 to 24, wherein said information processing part comprises a memory integrated IC chip with a transmitter.

26. A binding band for bird ring according to claims 18, 19, 21 or 22, wherein said connecting portion is formed with bent configuration.

27. A bird ring to which the binding band for bird ring according to any of claims 1 to 16, is bound, wherein a groove portion is provided at least at one of an upper edge and a lower edge of said bird ring, or in a portion at least on one of an outer wall and an inner wall of said bird ring, wherein at least a portion of said body part of said binding band can be fitted.

28. A bird ring structure to which said binding band for bird ring according to any of claims 1 to 27, is bound.
